# EUROPEAN PATENT SPECIFICATION

(11) **EP 2 368 187 B1**
(45) Date of publication and mention of the grant of the patent: **10.04.2013**
(21) Application number: 09789426.5
(22) Date of filing: 16.01.2009
(51) Int. Cl.: G06F 11/14

(54) **REPLICATED FILE SYSTEM FOR ELECTRONIC DEVICES**
DUPLIZIERTES DATEISYSTEM FÜR ELEKTRONISCHE EINRICHTUNGEN
SYSTÈME DE FICHIERS RÉPLIQUÉ POUR DISPOSITIFS ÉLECTRONIQUES

(30) Priority: 09.12.2008 US 330668
(43) Date of publication of application: 28.09.2011
(73) Proprietor: Sierra Wireless, Inc., Richmond, British Columbia V6V 3A4 (CA)
(72) Inventor: BRAMANTE, William, J., Apex NC 27502 (US); GRAHAM, Kerry, Raleigh NC 27615 (US)
(74) Representative: Ilgart, Jean-Christophe
(86) International application number: PCT/US2009/031235
(87) International publication number: WO 2010/068303

(56) References cited:
- EP-A- 1 199 636
- EP-A- 1 586 996
- EP-A- 1 679 599
- WO-A-2008/118656
- US-B1- 6 591 376

## Description

### BACKGROUND

Electronic devices often have internal storage of important information that can be modified and saved during normal operations. For the purpose of description in this invention, this storage shall be termed "Non-Volatile Memory" or "NVM". Within the NVM is an embedded file system (EFS). In certain situations, NVM integrity can be at risk. For example, if power to the device is removed during a write operation, the EFS could be corrupted or compromised. This invention describes a method to protect an electronic device's EFS within the NVM in the case of power being unexpectedly removed. In many portable electronic devices, size and cost are critical factors, so a large battery backup on the device would not be acceptable.

what is needed is a system that can reconstruct or replicate the EFS in the event that the NVM becomes corrupted.

WO 2008/118 656 describes a processing device which may automatically provide protective services and may provide backup services for backing up and restoring user files, system files, configuration files, as well as other information. The processing device may be configured to check one or more performance conditions and perform an action to improve performance based on the one or more performance conditions. The processing device may monitor configuration and file changes and provide a user with a capability to persist or discard configuration changes and/or file changes made by an application during a session. The processing device may include a recovery button or switch, which when selected or pressed may cause the processing device to be restored to an operational state. The processing device may automatically detect instabilities and may automatically attempt to repair possible causes of the instabilities. The processing device may also include an additional chipset, which may perform backup and recovery services.

US 6,591,376 describes a method and system for failsafe recovery and upgrade of an operating system embedded within a peripheral or consumer electronic device. The method and system involves replacing current implementations that use ROM memory to store a copy of the embedded operating system, or critical portions thereof, with a disk-based ROM and redundant backup copies of the initial operating system kernel and the primary image required for booting the final embedded operating system. By maintaining critical files in read-only partitions, the robustness and reliability achieved using ROM memory in currently available devices can be achieved without expensive ROM memory via the disk-based ROM.

### SUMMARY

The invention is more clearly defined in claims 1-3. independent [0003] One embodiment discloses a method of correcting corrupted data in an embedded file system (EFS) within a non-volatile memory (NVM) system that further includes a replicated file system (RFS). If EFS initialization is successful, a memory comparison between EFS memory sectors and corresponding RFS memory sectors is performed. If a mismatch between one or more memory sectors is determined then the RFS memory sectors that are out of sync with their corresponding EFS memory sectors are identified, erased and rewritten.

If EFS initialization is unsuccessful, a memory comparison between RFS memory sectors and corresponding EFS memory sectors is performed. If a mismatch between one or more memory sectors is determined then the EFS memory sectors that are corrupted are identified, erased and rewritten.

In another embodiment, the method above can be implemented on a computer readable medium storing a computer program product containing computer program code for performing the steps of the method.

In still another embodiment, a non-volatile memory (NVM) system capable of correcting corrupted data comprises an embedded file system (EFS) that further includes an application programming interface (API), one or more operating system processes, a flash driver and a replication layer. The replication layer manages both an EFS partition and an RFS partition wherein the RFS partition is a mirror image to the EFS partition system. When memory sectors of either the EFS partition or the RFS partition become out of synchronization with one another they can be resynchronized using the non-corrupted memory sectors of the non-corrupted partition.

The NVM system can be included within a wireless communication device.

The corrupted data can be the result of a sudden loss of power during a write operation and can be corrected during the next power up cycle of the NVM system.

The corrupted data can also be the result of a runtime error occurring during a read operation and can be corrected on the fly without having to power recycle the wireless communication device.

### BRIEF DESCRIPTION OF THE DRAWINGS

Figure 1 is a prior art block diagram that illustrates a typical embedded file system (EFS) within a non-volatile memory (NVM) system.

Figure 2 is a block diagram that illustrates an embedded file system (EFS) within a non-volatile memory (NVM) system according to the invention.

Figure 3 is a logic diagram that illustrates an implementation of correcting the EFS during the next boot sequence.

Figure 4 is a logic diagram that illustrates an implementation of read error correction of the EFS during runtime.

### DETAILED DESCRIPTION OF THE INVENTION

Non-volatile memory (NVM) corruption is a problem in wireless communication devices. NVM corruption is more prevalent in wireless communication devices that experience random power loss. Examples include wireless communication devices that are included or embedded in automobiles or transportation containers to name just a couple of applications. Following NVM corruption, a wireless communication device may no longer operate. Even if it still does operate, it does so with corrupted data that can include critical calibration data. For instance, if power to the wireless communication device is removed during a write operation, the memory can become corrupted.

In larger more stationary computer devices, a solution to this problem involves maintaining a second independent file system to back up the primary file system. This is more feasible in larger devices and systems since the type of memory is typically not flash memory and physical space and power consumption issues are not significant hurdles. In a wireless communication device, however, the memory used is typically flash memory and the modules that encompass these wireless communication devices are significantly constrained with respect to both physical space and power. Thus, applying an independent file system to back up the primary embedded file system within the NVM is not a practical solution to the problem described above since two independent file systems would create significant resource conflicts when competing for access to the same flash memory device.

The present disclosure describes a system and method for restoring the wireless communication device's NVM data following an event that causes corruption of NVM data. This solution is somewhat less complicated than an independent back up system since only the corrupted data is restored. A complete rebuild of the NVM storage system is not required.

For wireless communication devices data is typically stored on a flash memory device using an embedded file system (EFS). The system and method described herein duplicates all write operations to the primary EFS to a secondary memory location that is referred to as the replicated file system (RFS).

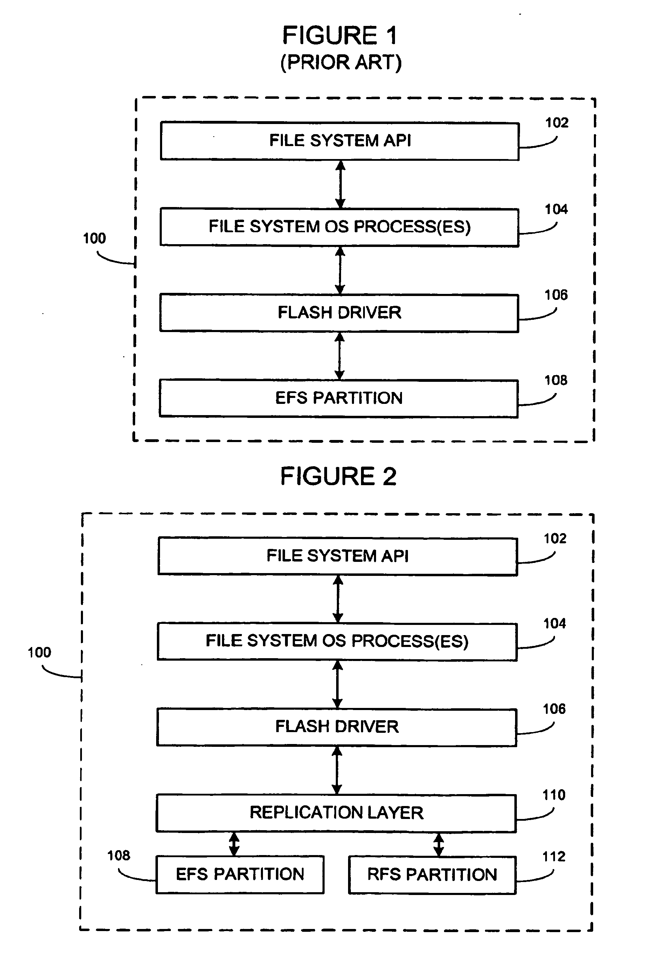

Figure 1 is a prior art block diagram that illustrates a typical embedded file system (EFS) 100 within a non-volatile memory (NVM) system. The EFS 100 is part of the larger NVM system within the wireless communication device. While not specifically shown herein, a wireless communication device of the type contemplated by the present invention includes a power source such as a battery and a processor that serve to power and control the overall operation of the wireless communication device. The EFS 100 includes a file system application programming interface (API) 102, file system operating system (OS) process(es) 104, a flash driver 106, and an EFS partition 108. These components work together along with the processor to handle the NVM storage requirements of the wireless communication device as a whole. If the data in the EFS partition 108 becomes corrupted due to a sudden power loss, it is not necessarily recoverable.

Figure 2 is a block diagram that illustrates an embedded file system (EFS) 100 within a non-volatile memory (NVM) system according to the invention. A replication layer 110 has been added to the EFS system 100. The replication layer 110 is responsible for managing a second memory partition, an RFS partition 112 in addition to the standard EFS partition 108.

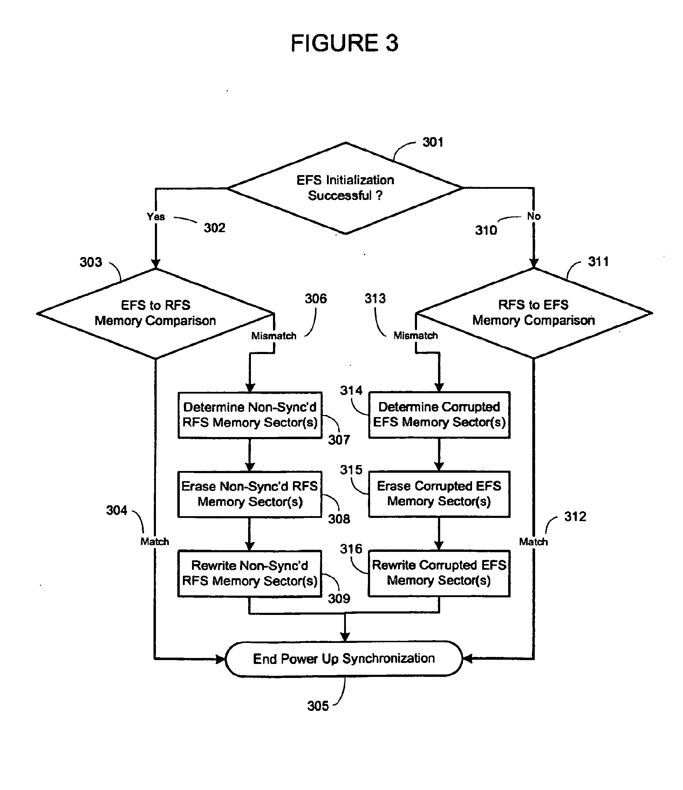

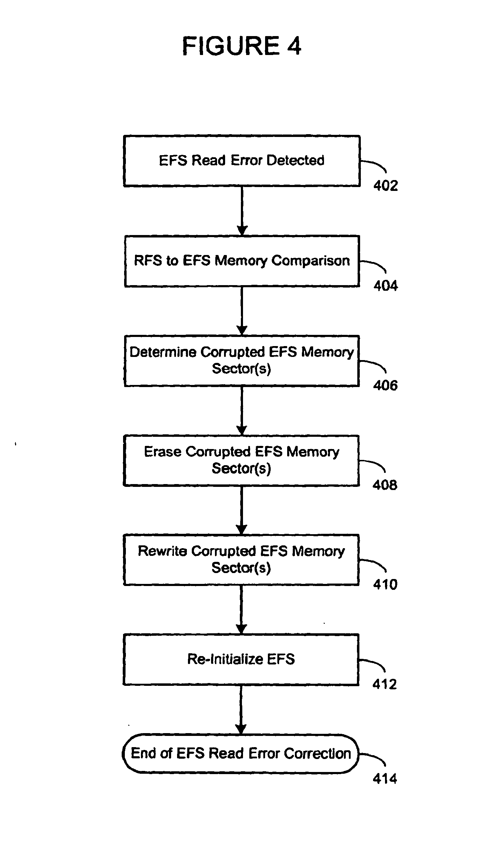

There are a couple of different scenarios in which the EFS can be reconstructed following a corrupting event. One scenario, described with reference to Figure 3, involves reconstructing the data during the next power cycle following the loss of power. The reconstruction would be part of the power up synchronization process. Another scenario, described with reference to Figure 4, involves correcting read errors during runtime that are not the result of a power loss and do not require the wireless communication device to be powered back up.

Figure 3 is a logic diagram that illustrates an implementation of correcting the EFS during the next boot sequence. This solution is an efficient method for correcting corrupted memory due to loss of power during a write operation to the flash memory. Only the affected flash memory sector(s) (the smallest amount of memory that can be erased) will be updated (i.e., erased and rewritten). Updating the affected sector(s) can be accomplished during the next power cycle following loss of power. More specifically, the EFS can be corrected during the next boot sequence without any significant performance degradation while also being transparent to external applications or systems that are interfaced with the wireless communication device.

When the wireless communication device is powered up following a loss of power, a check is made to determine whether EFS initialization was successful 301. If successful 302 then the EFS memory is compared to the RFS memory 303. If that Comparison yields a match 304 then the power up synchronization process ends 305. If the EFS memory comparison to the RFS memory 303 yields a mismatch 306 then the non-synced RFS memory sector(s) are identified 307, erased 308 and rewritten 309. The power up synchronization process then ends 305.

If the EFS initialization was unsuccessful 310 then an RFS to EFS memory comparison is performed 311. If that comparison yields a match 312 then the power up synchronization process ends 305. If the RFS to EFS memory comparison 311 yields a mismatch 313 then the corrupted EFS memory sector(s) are identified 314, erased 315 and rewritten 316. The power up synchronization process then ends 305.

A non-synced RFS memory sector is one that is not synchronized with a corresponding EFS memory sector. Non-synchronization can occur, for instance, due to a loss of power during a write operation to flash memory in which the write operation to the EFS completed but the replicated write to the RFS did not complete. Non-synchronization can also occur, for instance, due to a loss of power during an EFS sector erasure in which the EFS erasure completed but the replicated RFS erasure did not complete.

Figure 4 is a logic diagram that illustrates an implementation of read error correction of the EFS during runtime. This sometimes results from a phenomenon known as cosmic ray bit flipping. If a cosmic ray passes though a sensitive part of a semiconductor chip, for example, the logical state of the bit («on» or «of») can be flipped. This is called a single-event upset (SEU). A single-event upset can also result from a cosmic ray hitting the nucleus of an atom in a sensitive component location. The nuclear interaction can cause the nucleus to split, or spallate. The broken pieces of the nucleus then carry away most of the cosmic ray's energy. These bits of debris can then flip the bit state. A flipped bit state results in a read error.

If an EFS read error occurs a synchronization check between the RFS and EFS can be initiated and the corrupted sector(s) will be corrected on the fly without the need to reboot the system. Upon detection 402 of a read error, an RFS to EFS memory comparison 404 is initiated. Any corrupted EFS memory sector(s) are identified 406, erased 408 and rewritten 410. The EFS is then re-initialized 412 ending the read error correction process 414.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

Any prompts associated with the present invention may be presented and responded to via a graphical user interface (GUI) presented on the display of the mobile communications device or the like. Prompts may also be audible, vibrating, etc.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method for maintaining the integrity of information written into an embedded file system (EFS) of a non-volatile memory (NVM) system of a wireless device, the method comprising:
using a replication layer to build a mirror image to the EFS by replicating the information in a replicated file system (RFS);
performing a memory comparison (303) between EFS memory sectors and corresponding RFS memory sectors if EFS initialization was successful (302) and if a mismatch (306) between one or more memory sectors is determined;
identifying the RFS memory sectors that are out of sync with their corresponding EFS memory sectors (307);
erasing the RFS memory sectors that are out of sync with their corresponding EFS memory sectors (308); and
rewriting the RFS memory sectors that are out of sync with their corresponding EFS memory sectors such that they become synchronized again (309),
and
performing a memory comparison (311) between RFS memory sectors and corresponding EFS memory sectors if EFS initialization was unsuccessful (310) and if a mismatch (313) between one or more memory sectors is determined;
identifying the EFS memory sectors that are corrupted (314);
erasing the EFS memory sectors that are corrupted (315); and
rewriting the EFS memory sectors that are corrupted such that the EFS and RFS memory sectors become synchronized again (316).

2. A computer readable medium storing a computer program product for maintaining the integrity of information written into an embedded file system (EFS) within a non-volatile memory (NVM) of a wireless device, the computer readable medium comprising:
computer program code for replicating the information in a replicated file system (RFS);
computer program code for performing a memory comparison (303) between EFS memory sectors and corresponding RFS memory sectors if EFS initialization was successful (302) and if a mismatch (306) between one or more memory sectors is determined;
computer program code for identifying the RFS memory sectors that are out of sync with their corresponding EFS memory sectors (307);
computer program code for erasing the RFS memory sectors that are out of sync with their corresponding EFS memory sectors (308); and
computer program code for rewriting the RFS memory sectors that are out of sync with their corresponding EFS memory sectors such that they become synchronized again (309),
and
computer program code for performing a memory comparison (311) between RFS memory sectors and corresponding EFS memory sectors if EFS initialization was unsuccessful (310) and if a mismatch (313) between one or more memory sectors is determined;
computer program code for identifying the EFS memory sectors that are corrupted (314);
computer program code for erasing the EFS memory sectors that are corrupted (315); and
computer program code for rewriting the EFS memory sectors that are corrupted such that the EFS and RFS memory sectors become synchronized again (316).

3. A non-volatile memory (NVM) system of a wireless device capable of correcting corrupted data comprising:
an embedded file system (EFS) (100) including:
a replication layer (110) for managing both an EFS partition (108) and an RFS partition (110) wherein the RFS partition (110) is a mirror image to the EFS partition (108) system such that when memory sectors of either the EFS partition (108) or the RFS partition (110) become out of synchronization with one another they can be resynchronized using the non-corrupted memory sectors of the non-corrupted partition, the replication layer performing a memory comparison (303) between EFS memory sectors and corresponding RFS memory sectors if EFS initialization was successful (302) and if a mismatch (306) between one or more memory sectors is determined;
identifying the RFS memory sectors that are out of sync with their corresponding EFS memory sectors (307);
erasing the RFS memory sectors that are out of sync with their corresponding EFS memory sectors (308); and
rewriting the RFS memory sectors that are out of sync with their corresponding EFS memory sectors such that they become synchronized again (309),
and
performing a memory comparison (311) between RFS memory sectors and corresponding EFS memory sectors if EFS initialization was unsuccessful (310) and if a mismatch (313) between one or more memory sectors is determined;
identifying the EFS memory sectors that are corrupted (314);
erasing the EFS memory sectors that are corrupted (315); and
rewriting the EFS memory sectors that are corrupted such that the EFS and RFS memory sectors become synchronized again (316).

4. The system of any of claims 3 wherein the NVM system is included within a wireless communication device.

5. The system of claim 4 wherein the corrupted data is the result of a sudden loss of power during a write operation.

6. The system of claim 5 wherein the correcting of the corrupted data that is the result of a sudden loss of power during a write operation is performed during the next power up cycle of the NVM system.

7. The system of claim 4 wherein the corrupted data is the result of a runtime error occurring during a read operation.

8. The system of claim 7 wherein the correcting of the corrupted data that is the result of a runtime error occurring during a read operation is performed on the fly without having to power recycle the wireless communication device.

## Patentansprüche

1. Verfahren zum Erhalten der Integrität von Information, die in einem eingebetteten Dateisystem (EFS) eines nicht-flüchtigen Speicher (NVM)-Systems von einem drahtlosen Gerät geschrieben ist, wobei das Verfahren umfasst:
Verwenden einer Replikationsschicht, um ein Spiegelabbild zum EFS durch Replizieren der Information in einem replizierten Dateisystem (RFS) aufzubauen;
Durchführen eines Speichervergleichs (303) zwischen EFS-Speichersektoren und dazugehörigen RFS-Speichersektoren, falls eine EFS-Initialisierung erfolgreich war (302) und falls eine Ungleichheit (306) zwischen einem oder mehreren Speichersektoren festgestellt wird;
Identifizieren der RFS-Speichersektoren, welche nicht mit ihren dazugehörigen EFS-Speichersektoren synchron sind (307);
Löschen der RFS-Speichersektoren, die nicht mit ihren dazugehörigen EFS-Speichersektoren synchron sind (308); und
Wiederbeschreiben der RFS-Speichersektoren, die nicht mit ihren dazugehörigen EFS-Speichersektoren synchron sind, derart, dass sie wieder synchron sind (309), und
Durchführen eines Speichervergleichs (311) zwischen RFS-Speichersektoren und dazugehörigen EFS-Speichersektoren, falls eine EFS-Initialisierung nicht erfolgreich war (310) und falls eine Ungleichheit (313) zwischen einem oder mehreren Speichersektoren festgestellt wird;
Identifizieren der EFS-Speichersektoren, welche beschädigt sind (314);
Löschen der EFS-Speichersektoren, die beschädigt sind (315); und
Wiederbeschreiben der EFS-Speichersektoren, die beschädigt sind, derart, dass die EFS- und die RFS-Speichersektoren wieder synchron sind (316).

2. Computerlesbares Medium, welches ein Computerprogrammprodukt zum Erhalten der Integrität von Information speichert, die in einem eingebetteten Dateisystem (EFS) eines nicht-flüchtigen Speichers (NVM) von einem drahtlosen Gerät geschrieben ist, wobei das computerlesbare Medium umfasst:
Computerprogrammcode zum Replizieren der Information in einem replizierten Dateisystem (RFS);
Computerprogrammcode zum Durchführen eines Speichervergleichs (303) zwischen EFS-Speichersektoren und dazugehörigen RFS-Speichersektoren, falls eine EFS-Initialisierung erfolgreich war (302) und falls eine Ungleichheit (306) zwischen einem oder mehreren Speichersektoren festgestellt wird;
Computerprogrammcode zum Identifizieren der RFS-Speichersektoren, welche nicht mit ihren dazugehörigen EFS-Speichersektoren synchron sind (307);
Computerprogrammcode zum Löschen der RFS-Speichersektoren, die nicht mit ihren dazugehörigen EFS-Speichersektoren synchron sind (308); und
Computerprogrammcode zum Wiederbeschreiben der RFS-Speichersektoren, die nicht mit ihren dazugehörigen EFS-Speichersektoren synchron sind, derart, dass sie wieder synchron sind (309), und
Computerprogrammcode zum Durchführen eines Speichervergleichs (311) zwischen RFS-Speichersektoren und dazugehörigen EFS-Speichersektoren, falls eine EFS-Initialisierung nicht erfolgreich war (310) und falls eine Ungleichheit (313) zwischen einem oder mehreren Speichersektoren festgestellt wird;
Computerprogrammcode zum Identifizieren der EFS-Speichersektoren, welche beschädigt sind (314);
Computerprogrammcode zum Löschen der EFS-Speichersektoren, die beschädigt sind (315); und
Computerprogrammcode zum Wiederbeschreiben der EFS-Speichersektoren, die beschädigt sind, derart, dass die EFS- und die RFS-Speichersektoren wieder synchron sind (316).

3. Nicht-flüchtiges Speicher (NVM)-System von einem drahtlosen Gerät, welches zum Korrigieren von beschädigten Daten geeignet ist, umfassend:
ein eingebettetes Dateisystem (EFS) (100), welches enthält:
eine Replikationsschicht (110) zum Verwalten einer EFS-Partition (108) und einer RFS-Partition (110), wobei die RFS-Partition (110) ein Spiegelabbild zum System der EFS-Partition (108) derart ist, dass, wenn Speichersektoren entweder von der EFS-Partition (108) oder der RFS-Partition (110) keine Synchronität miteinander aufweisen, sie mittels der nicht beschädigten Speichersektoren der nicht beschädigten Partition neu synchronisiert werden können, wobei die Replikationsschicht einen Speichervergleich (303) zwischen EFS-Speichersektoren und dazugehörigen RFS-Speichersektoren durchführt, falls eine EFS-Initialisierung erfolgreich war (303) und falls eine Ungleichheit (306) zwischen einem oder mehreren Speichersektoren festgestellt wird;
Identifizieren der RFS-Speichersektoren, welche nicht mit ihren dazugehörigen EFS-Speichersektoren synchron sind (307);
Löschen der RFS-Speichersektoren, die nicht mit ihren dazugehörigen EFS-Speichersektoren synchron sind (308); und
Wiederbeschreiben der RFS-Speichersektoren, die nicht mit ihren dazugehörigen EFS-Speichersektoren synchron sind, derart, dass sie wieder synchron sind (309), und
Durchführen eines Speichervergleichs (311) zwischen RFS-Speichersektoren, falls eine EFS-Initialisierung nicht erfolgreich war (310) und falls eine Ungleichheit (313) zwischen einem oder mehreren Speichersektoren festgestellt wird;
Löschen der EFS-Speichersektoren, welche beschädigt sind (315); und
Wiederbeschreiben der RFS-Speichersektoren, die beschädigt sind, derart, dass die EFS- und die RFS-Speichersektoren wieder synchron sind (316).

4. System nach Anspruch 3, wobei das NVM-System in einem drahtlosen Kommunikationsgerät enthalten ist.

5. System nach Anspruch 4, wobei die beschädigten Daten das Resultat eines plötzlichen Energieverlusts während einer Schreiboperation sind.

6. System nach Anspruch 5, wobei das Korrigieren der beschädigten Daten, welche das Resultat eines plötzlichen Energieverlusts während einer Schreiboperation sind, während des nächsten Anschaltzyklus des NVM-Systems durchgeführt wird.

7. System nach Anspruch 4, wobei die beschädigten Daten das Resultat eines Laufzeitfehlers sind, der während einer Leseoperation aufgetreten ist.

8. System nach Anspruch 7, wobei das Korrigieren der beschädigten Daten, welche das Resultat eines Laufzeitfehlers sind, der während einer Leseoperation aufgetreten ist, während des Betriebs durchgeführt wird, ohne dass dem drahtlosen Kommunikationsgerät Energie erneut zuzuführen ist.

## Revendications

1. Procédé de maintien de l'intégrité d'informations écrites dans un système de fichier intégré (EFS) d'un système de mémoire non volatile (NVM) d'un dispositif sans fil, le procédé comprenant :
l'utilisation d'une couche de réplication pour construire une image miroir de l'EFS en répliquant les informations dans un système de fichier répliqué (RFS) ;
la réalisation d'une comparaison de mémoire (303) entre des secteurs de mémoire EFS et des secteurs de mémoire RFS correspondants si une initialisation d'EFS a été réussie (302) et si un désaccord (306) entre un ou plusieurs secteurs de mémoire est déterminé ;
l'identification des secteurs de mémoire RFS qui sont désynchronisés de leurs secteurs de mémoire EFS correspondants (307) ;
l'effacement des secteurs de mémoire RFS qui sont désynchronisés de leurs secteurs de mémoire RFS correspondants (308) ; et
la réécriture des secteurs de mémoire RFS qui sont désynchronisés de leurs secteurs de mémoire RFS correspondants de telle sorte qu'ils redeviennent synchronisés (309), et
la réalisation d'une comparaison de mémoire (311) entre des secteurs de mémoire RFS et des secteurs de mémoire EFS correspondants si une initialisation d'EFS n'a pas été réussie (310) et si un désaccord (313) entre un ou plusieurs secteurs de mémoire est déterminé ;
l'identification des secteurs de mémoire EFS qui sont corrompus (314) ;
l'effacement des secteurs de mémoire EFS qui sont corrompus (315) ; et
la réécriture des secteurs de mémoire EFS qui sont corrompus de telle sorte que les secteurs de mémoire EFS et RFS redeviennent synchronisés (316).

2. Support lisible par ordinateur stockant un produit de programme informatique permettant de maintenir l'intégrité d'informations écrites dans un système de fichier intégré (EFS) au sein d'une mémoire non volatile (NVM) d'un dispositif sans fil, le support lisible par ordinateur comprenant :
un code de programme informatique permettant de répliquer des informations dans un système de fichier répliqué (RFS) ;
un code de programme informatique permettant de réaliser une comparaison de mémoire (303) entre des secteurs de mémoire EFS et des secteurs de mémoire RFS correspondants si une initialisation d'EFS a été réussie (302) et si un désaccord (306) entre un ou plusieurs secteurs de mémoire est déterminé ;
un code de programme informatique permettant d'identifier les secteurs de mémoire RFS qui sont désynchronisés de leurs secteurs de mémoire EFS correspondants (307) ;
un code de programme informatique permettant d'effacer les secteurs de mémoire RFS qui sont désynchronisés de leurs secteurs de mémoire RFS correspondants (308) ; et
un code de programme informatique permettant de réécrire les secteurs de mémoire RFS qui sont désynchronisés de leurs secteurs de mémoire RFS correspondants de telle sorte qu'ils redeviennent synchronisés (309),
et
un code de programme informatique permettant de réaliser une comparaison de mémoire (311) entre des secteurs de mémoire RFS et des secteurs de mémoire EFS correspondants si une initialisation d'EFS n'a pas été réussie (310) et si un désaccord (313) entre un ou plusieurs secteurs de mémoire est déterminé ;
un code de programme informatique permettant d'identifier les secteurs de mémoire EFS qui sont corrompus (314) ;
un code de programme informatique permettant d'effacer les secteurs de mémoire EFS qui sont corrompus (315) ; et
un code de programme informatique permettant de réécrire les secteurs de mémoire EFS qui sont corrompus de telle sorte que les secteurs de mémoire EFS et RFS redeviennent synchronisés (316).

3. Système de mémoire non volatile (NVM) d'un dispositif sans fil capable de corriger les données corrompues comprenant :
un système de fichier intégré (EFS) (100) incluant :
une couche de réplication (110) permettant de gérer à la fois une division EFS (108) et une division RFS (110), où la division RFS (110) est une image miroir du système de division EFS (108) de sorte que lorsque des secteurs de mémoire de l'une quelconque parmi la division EFS (108) ou la division RFS (110) deviennent désynchronisés les uns avec les autres, ils peuvent être resynchronisés en utilisant les secteurs de mémoire non corrompus de la division non corrompue, la couche de réplication réalisant une comparaison de mémoire (303) entre des secteurs de mémoire EFS et des secteurs de mémoire RFS correspondants si une initialisation d'EFS a été réussie (302) et si un désaccord (306) entre un ou plusieurs secteurs de mémoire est déterminé ;
l'identification des secteurs de mémoire RFS qui sont désynchronisés de leurs secteurs de mémoire EFS correspondants (307) ;
l'effacement des secteurs de mémoire RFS qui sont désynchronisés de leurs secteurs de mémoire RFS correspondants (308) ; et
la réécriture des secteurs de mémoire RFS qui sont désynchronisés de leurs secteurs de mémoire RFS correspondants de telle sorte qu'ils redeviennent synchronisés (309),
et
la réalisation d'une comparaison de mémoire (311) entre des secteurs de mémoire RFS et des secteurs de mémoire EFS correspondants si une initialisation d'EFS n'a pas été réussie (310) et si un désaccord (313) entre un ou plusieurs secteurs de mémoire est déterminé ;
l'identification des secteurs de mémoire EFS qui sont corrompus (314) ;
l'effacement des secteurs de mémoire EFS qui sont corrompus (315) ; et
la réécriture des secteurs de mémoire EFS qui sont corrompus de telle sorte que les secteurs de mémoire EFS et RFS redeviennent synchronisés (316).

4. Système selon la revendication 3, dans lequel le système NVM est inclus dans un dispositif de communication sans fil.

5. Système selon la revendication 4, dans lequel les données corrompues sont la conséquence d'une perte soudaine de puissance pendant une opération d'écriture.

6. Système selon la revendication 5, dans lequel la correction des données corrompues qui sont la conséquence d'une perte soudaine de puissance pendant une opération d'écriture est réalisée pendant le cycle de mise sous tension suivant du système NVM.

7. Système selon la revendication 4, dans lequel les données corrompues sont la conséquence d'une erreur en temps de marche se produisant pendant une opération de lecture.

8. Système selon la revendication 7, dans lequel la correction des données corrompues qui sont la conséquence d'une erreur en temps de marche se produisant pendant qu'une opération de lecture est réalisée à la volée sans avoir à mettre le dispositif de communication sans fil en cycle de redémarrage.
